# EUROPEAN PATENT APPLICATION

(11) **EP 2 264 091 A2**
(43) Date of publication of application: **22.12.2010**
(21) Application number: 10166326.8
(22) Date of filing: 17.06.2010
(51) Int. Cl.: C08J 11/10, B29B 17/02, C10G 1/10, C03C 25/00, C10B 53/07

(54) **Method and apparatus for thermal cracking organic macromolecule mixture to recycle differentiated substrates**

(30) Priority: 18.06.2009 TW 098120358
(71) Applicant: Wu, Hsieh-Sen, Guei Shan T'ao yuan (TW)
(72) Inventor: Wu, Hsieh-Sen, Guei Shan T'ao yuan (TW)
(74) Representative: Ihle, Kornelia

(57) **Abstract**

A method and an apparatus for thermal cracking organic macromolecule mixture to recycle differentiated substrates, comprising mainly of thermal cracking organic macromolecule by using molten inorganic salt, which can separate easily substrates mixed in macromolecular materials, achieve readily the object of differentiation, obtain large area (volume) of substrates without damaging the characteristics of original substrates, increase re-usability, and even more important, in the course of treatment, accomplish simultaneously objects of energy-saving and carbon-reducing as well as pollution control, thereby provide method for treating organic macromolecule wastes, a method and an apparatus for differentiating substrates.

## Description

### BACKGROUND OF THE INVENTION

### 1. Field of the invention

The invention relates to a method and an apparatus for thermal cracking organic macromolecule mixture to recycle differentiated substrates, and in particular, to a method and an apparatus for disposing, recycling and reusing organic macromolecule mixture and isolation of substrates in the organic macromolecule mixed material from said organic macromolecule, thereby creating the maximum reusing value of resource recycle and achieve the object of energy-saving and carbon reducing.

### 2. Description of the prior art

Organic macromolecular materials, including plastics, rubber, fiber, adhesives, paints and the like, have been used extensively in a variety of fields. In order to have different functionality, complex combination is largely combined with a great amount of substrates such as metal fiber, glass fiber, carbon fiber, metal, glass, ceramics and the like in the use. Under this circumstance, recycling and reuse of associated waste materials generated during the production and after use has become relatively complicated and difficult. Very often, steps including sorting, breaking, screening, pulverizing, etching, incinerating and the like are necessary for achieving the object of differential recycling.

Speaking generally, common organic macromolecular materials including plastics, rubber, fiber, adhesives, paints and the like are organic compounds, which have a specific gravity less than metal, exhibit good chemical resistance, high plasticity, and are able to be cured with high mechanical strength and insulation, can be applied extensively in a variety of fields as well as in composite materials with substrates such as metal fiber, glass fiber, carbon fiber, metal, glass, ceramics and the like. Unfortunately, organic macromolecule mixture is not tolerable to flame, and will keep on burning after being ignited. This property is overcome generally by adding halogen-containing flame retardant.

Further, organic macromolecule is difficult to decompose in the natural environment, which causes the biggest burden on the waste disposal. The most frequently used method for the disposal of organic macromolecule mixture is incineration treatment while applies the heat source. However, in the course of incineration, halides are susceptible to be generated to pollute the environment (for example, a noxious event is the dioxin pollution) that is not easy to deal with and often causes environmental issues.

Present organic macromolecule mixed materials have to be broken, screened, pulverized to be micronized, and then, sorting out different metals, fibers, macromolecular materials and the like through physical or chemical manners. This sorting course must use multiple processes and a lot of equipments. Besides, substances obtained after sorting are in the form of powder losing their original shape, which lowers greatly the utility of substrates that becomes recycled materials or need reform to be reusable. Nevertheless, the incineration of the final residues produces invariably still environmental pollution issues.

In which, organic macromolecule mixtures can be decomposed through thermal cracking to recover carbon and tar, and there had been studies and implements regarding this. Since equipments for thermal cracking must be utilized in an oxygen-free sealed environment, and heat transfer property of an organic macromolecule is poor, thermal cracking needs a very long time to be finished, and mixed materials will give the system serious burden. Further, since substrates can not be removed right in the course of thermal cracking, macromolecular materials and substrates must be separated previously before thermal cracking, and carry out thermal cracking process then. In the execution of thermal cracking process, there is still a problem of halide discharging, for example, polyvinyl chloride (PVC) giving the risks of hydrogen chloride and dioxin discharges. Further, thermosetting plastics is difficult to separate and can only be treated mainly through incineration.

The inventor of this application had filed an invention patent application titled:
"Method and apparatus for treating waste product containing brominated epoxy resin and glass fiber" , on January 30, 2003 (Fig. 1). Its detailed content can be referred to Patent No. 250180 and will not give more description here. Said invention did give good effect on the treatment of glass fiber and brominated epoxy resin (an organic macromolecule), but had following defects in the course of treatment:
   1. Verified under practical operation, the quantity of gas generated during thermal cracking will increase as the temperature increases. In case of insufficient sealing and oxygen penetrated, it is susceptible to phenomena of burning to flame and gas explosion. In addition, carbon ashes discharged with flue gas might cause a risk in the operation. It is essential to set up an operation environment isolated from oxygen.
   2. Once carbon slag floating out in great amount, they tend to gather together and form lump-like membrane so as to prevent the discharging of waste gas. Further, when reactants are removed, gas might eject out together with them and hence affect the safety of operation. Therefore, it is essential to set up a carbon slag floating out device.
   3. When waste gas is discharged through guiding device, the effect of discharging is limitative and slow. Besides, in case of negative pressure, air (oxygen) will enter to incur the system into an unsteady state.
   4. Treatment of organic gas has to use oxygen-enhancing burning device. For this, since substances involved are complex and each with different ignition point and insufficient purity, more energy supply is needed, which increase the cost of treatment. With respect to this, the gas generated in the thermal cracking can be recycled and reused strongly, and further a perfect energy-saving and carbon reducing mode can be created.
   5. In a sealed environment, because a thermal cracking is a curvature reaction, the variation of gas quantity generated is very large and the fluctuation of pressure is very great, which causes the control of pressure equilibrium not easy and hence the control of operation system becomes difficult.

Accordingly, in view of the foregoing, present conventional technique for treating organic macromolecule mixed material has still many imperfect applications. How to use thermal cracking technique effectively is a very important aspect, and greater responsibility and obligation is involved to the protection of our environment.

In light of various disadvantages derived from the above-described conventional technique, the inventor had devoted to improve and innovate, and finally, after studying intensively for many years, developed successfully the inventive method and apparatus for thermal cracking organic macromolecule mixture to recycle differentiated substrates.

### SUMMARY OF THE INVENTION

The object of the invention is to provide an aspect to assure the absence of burning phenomenon in the course of thermal cracking, and to strengthen the safety of operator in the treatment.

Another object of the invention is to provide an aspect with respect to organic gases which can be concentrated and purified into useful fuel or chemical raw materials, which has multiple benefits: in addition to lower the cost of treatment and increase recycling value, a safe treating apparatus can be created, and hence has an extremely high industrial application value.

Method and apparatus for thermal cracking organic macromolecule mixture to recycle differentiated substrates that can achieve the above-described objects comprises:
(1) Using molten inorganic salt to replace present used sealing thermal cracking device such that the thermal cracking of organic macromolecule mixture is carried out in molten inorganic salt; where said molten inorganic salt refers to nitrate salt or nitrite salt to be used as heat medium, catalyst, stabilizer, and halogen trap reactant, such that highly active metals in the inorganic salt can capture halogen to form stable halide salt, and thus set up a stable environment-protected disposal mode.
(2) Using molten inorganic salt to thermal crack organic macromolecule mixture so as to separate substrates from the mixture and complete the object of differentiated recycling; since molten salt is a liquid which can adjust and change the jointing face arbitrarily, that means a "liquid state reaction device" can be varied and operated according to the shape and space of reactants. As the temperature used in the treatment of organic macromolecule mixture is not high, while heat tolerance of general substrates such as metal fiber, glass fiber, carbon fiber, metal, glass, ceramics and the like is even higher, thus no damage on the substrates will occur relatively. In addition, after thermal cracking, substrates are easy to separate and hence to be differentiated. Accordingly, the re-usability is increased relatively and the utilization value of substrates can be increased effectively.
(3) In order to reduce the quantity of thermal cracking waste gas and increase the recycle of carbon, the thermal cracking can be carried out under the condition of lowering the temperature of molten salt below 380°C, which raises the treating amount of the apparatus, carbon slag can be recycled and reused, and hence increases further the re-utilization value of organic macromolecule mixture, and thus achieve objects of energy-saving and carbon-reducing simultaneously.
(4) In order to reduce gas explosion and ignition phenomena in the thermal cracking, other than increasing the sealing property of the reaction furnace to form a positive pressure operation environment and insulate the entrance of air (oxygen), a moisture steady pressure reaction system is added particularly to set up the discharging function of organic gases in the reaction furnace such that moisture can participate in the reaction course, heating and expanding using the water, while cooling molten salt and reactants using moisture to force the lowering of the temperature of the molten salt. This can prevent the reaction from being too fierce, is an effective cooling method, which can cool the reaction before removing the reactants and thus increase the safety of operation.
(5) Once carbon slag stacking into carbon membrane over the whole surface of molten inorganic salt liquid, discharging of waste gases will be hindered. Therefore, set up a carbon slag floating mechanism such that as the carbon membrane removes molten salt, the organic gases can be discharged first. This can combined with the introduction of moisture to generate steam expansion pushing force, thereby increase waste gas discharging efficiency, enhance safe operation of reaction furnace, remove carbon slag completely from the surface of molten salt, and return to the initial working condition.
(6) For treating waste gas after reaction, a condensation/compression recycling tar mode is used in lieu of original oxygen-increasing burning mode, which can decrease treating cost, lower heat discharging, and increase the re-usability of organic materials. Large molecular organic materials and part of carbon ash will form tar (high ignition point) after condensation. Tar thus collected can be used as fuel or can be processed further into industrial raw materials. Organic gases (low ignition point) and nitrogen oxide gases that can not be condensed can be guided into burning devices to recover heat energy, transformed into electric energy and the like; or, they can be treated through a commercial organic gas and nitrogen oxide gas treating mechanism (VOCS) and then can be discharged safely.
(7) In the thermal decomposition of organic macromolecule mixture, under the consideration of the permission of substrate characteristics or low macromolecule content, in order to seek higher rapid effect, the treating temperature can be raised to obtain higher rapid thermal decomposition efficiency (since higher temperature, higher reaction rate). To prevent excessively high temperature, a molten salt cooling means (introducing moisture) can be added to suppress the increase of molten salt temperature, which can become a safe treating mode.
(8) The reaction in the thermal cracking of organic macromolecule mixture using molten inorganic salt is a process reaction. After reaction, reaction products have to be removed out of reaction furnace. The reaction is quantity-limiting. Processes in the reaction include heating, decomposing, reacting, venting and the like. To the decomposition reaction, its short time period and large variation in gas quantity make its control uneasy. For increasing operation safety, a gas expansion/contraction system is set up such that gas quantity generated in the reaction process can be absorbed in a suitable range to maintain a constant pressure output, thereby achieve the object of safe treating, increase treating quantity of the apparatus, increase investment benefit, as well as raise production yield and also safety of the apparatus.
(9) Set up a vertical feeding system; since hot gas within the reaction furnace will push from lower part upwardly toward upper part, when reactants is fed, the reaction stand tends to carry part of air into the reaction furnace. By way of moisture introducing device, moisture or inert gas or nitrogen gas is introduced and heated over the surface of reaction furnace, expanded to generate ascending gas flow and gas flow guiding channel, which can feed air pushed, crowded and stayed in the reaction stand during reaction course, and hence achieve further the gas-removing function.
(10) Set up a mobile sealing gate system for removing reactant out of molten salt. When reactants are removed out of molten salt, a lot of gases might escape together with the reactants and cause operation risk. A mobile sealing gate system can be used to remove reactants out of molten salt, and remove them out of reaction furnace after discharging of organic gases. Further, it can combined with moisture introducing device to cool reactants with moisture or inert gas or nitrogen gas and push forcibly the organic gases out of reaction furnace, thereby increase operation safety.

### BRIEF DESCRIPTION OF THE DRAWINGS

The drawings disclose an illustrative embodiment of the present invention which serves to exemplify the various advantages and objects hereof, and are as follows:

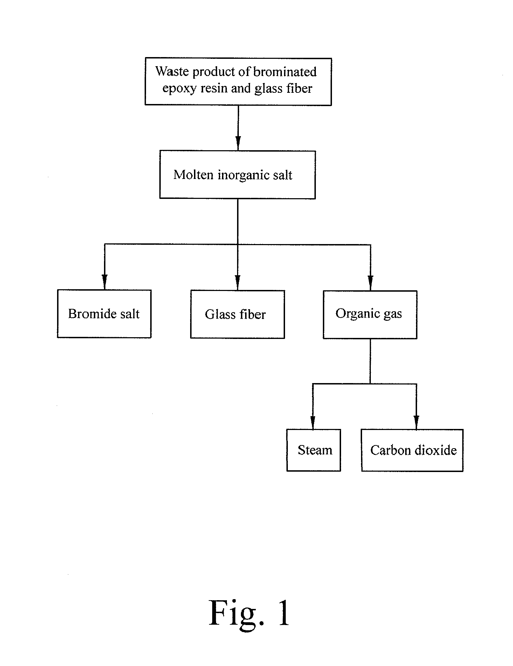

Figure 1 shows a thermal cracking flow chart of a conventional method for thermal cracking organic macromolecule;
Figure 2 shows the thermal cracking recycling flow chart of the inventive method and apparatus for thermal cracking organic macromolecule mixture to recycle differentiated substrates;

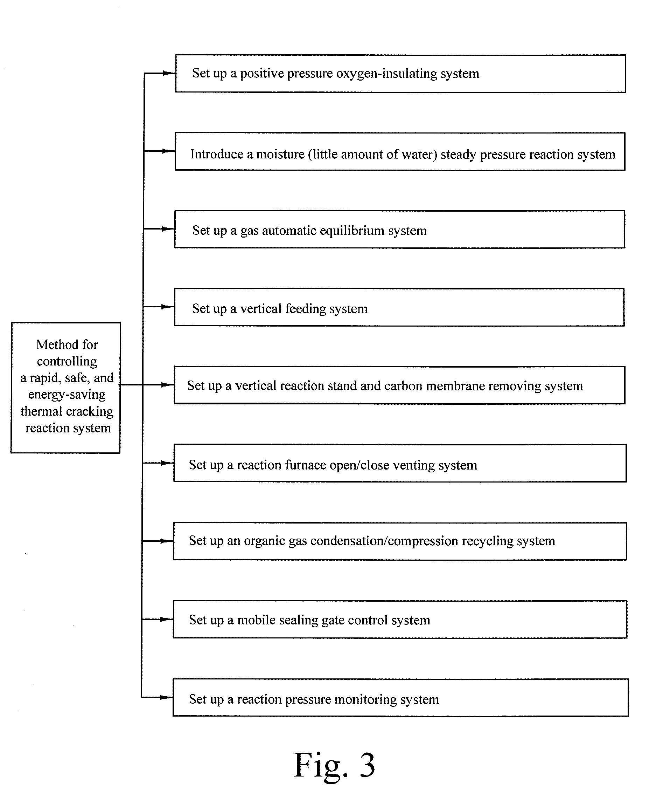

Figure 3 is an exploded view showing the control of thermal cracking reaction system for said method and apparatus for thermal cracking organic macromolecule mixture to recycle differentiated substrates;
Figure 4 is a schematic view showing the structure of gas automatic expansion device for said method and apparatus for thermal cracking organic macromolecule mixture to recycle differentiated substrates;
Figure 5 is a schematic view showing another structure of gas automatic expansion device for said method and apparatus for thermal cracking organic macromolecule mixture to recycle differentiated substrates;
Figure 6 is a schematic view showing the whole framework of thermal cracking reaction apparatus for said method and apparatus for thermal cracking organic macromolecule mixture to recycle differentiated substrates; and
Figure 7A to 7E are schematic views showing the carrying out of a thermal cracking reaction for said method and apparatus for thermal cracking organic macromolecule mixture to recycle differentiated substrates.

### [Reference Numerals]

- 100: reaction furnace
- 101: reaction furnace heater
- 102: molten inorganic salt
- 103: reaction furnace gas buffering area
- 104: mobile sealing gate
- 105: upper lid
- 106: fixing stand for reactant delivery
- 107: drive for reaction stand delivery
- 108: drive for reaction stand entering
- 109: reaction stand connector
- 110: mobile reaction stand
- 111: moisture introducing device
- 112: reaction furnace waste gas exit
- 113: reaction furnace mobile water seal valve
- 114: waste gas buffering area
- 115: control valve for water feeding
- 116: control valve for water discharging
- 117: reaction furnace pressure control meter
- 118: gas automatic expansion device
- 119: safe discharging device
- 120: reactant
- 200: waste gas condensation/recycling device
- 201: condensation/compression pipe
- 202: condensation/spraying device
- 203: condensation water sealing tank
- 204: tar
- 205: gas exit
- 206: pressure pump
- 207: tar exit
- 208: gas/ liquid separation tank
- 209: water layer
- 210: gas temporary storing area
- 300: pipe
- 400: waste gas treating device
- 500: gas safe discharging port

### DETAILED DESCRIPTION OF THE PREFERRED EMBODIMENT

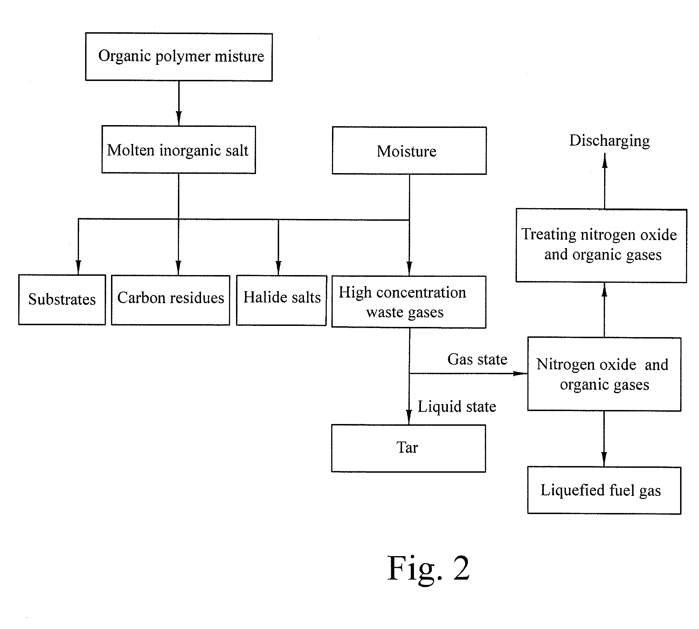

Referring to Fig. 2, the thermal cracking recycling flow chart of the inventive method and apparatus for thermal cracking organic macromolecule mixture to recycle differentiated substrates comprises of feeding organic macromolecule mixture into molten inorganic salt that refers to nitrate salt or nitrite salt. Said molten inorganic salt forms a sealed liquid state thermal cracking reaction device and heats the macromolecule. Said macromolecule will be cracked by the heat and form carbon slag, tar, organic gases and the like. Halogen in the macromolecule will be released in the thermal cracking. Highly active metals such as lithium, sodium, potassium, rubidium, cesium, and francium in the molten salt will combined with halogens such as fluorine, chlorine, bromine, iodine and astatine in the thermal cracking to form halide salt and nitrogen oxides. Not only will destroy the structure of macromolecular material during thermal cracking reaction such that organic macromolecule mixture might decompose into organic gas and carbon ash, but also will capture halogen to recover them. After thermal cracking reaction, since inorganic salt and halide salt can be dissolved rapidly in water, while carbon slag and substrates are insoluble in water, thereby the object of recycling can be achieved readily, and the substrates thus obtained are the original substrates such as metal fiber, glass fiber, carbon fiber, metal, glass, ceramics and the like. Further, since the temperature in thermal cracking is not high, and will not destroy substrates, the re-usable benefit of substrates could be raised. Organic gases can be separated through condensation/ compression to form condensable large molecules combustible oil on one hand and incondensable small molecule combustible gas on the other hand, and recycled to re-use, respectively. Halide salts are different greatly from inorganic salts in melting point and specific gravity; this makes their separation and application not difficult. The halide salts thus separated can be converted again into industrial raw materials to reuse.

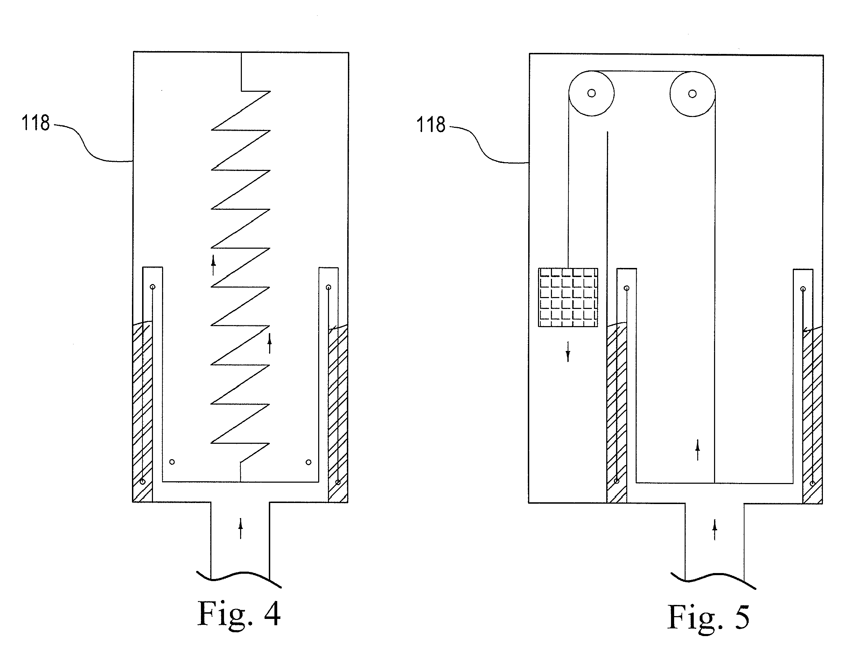

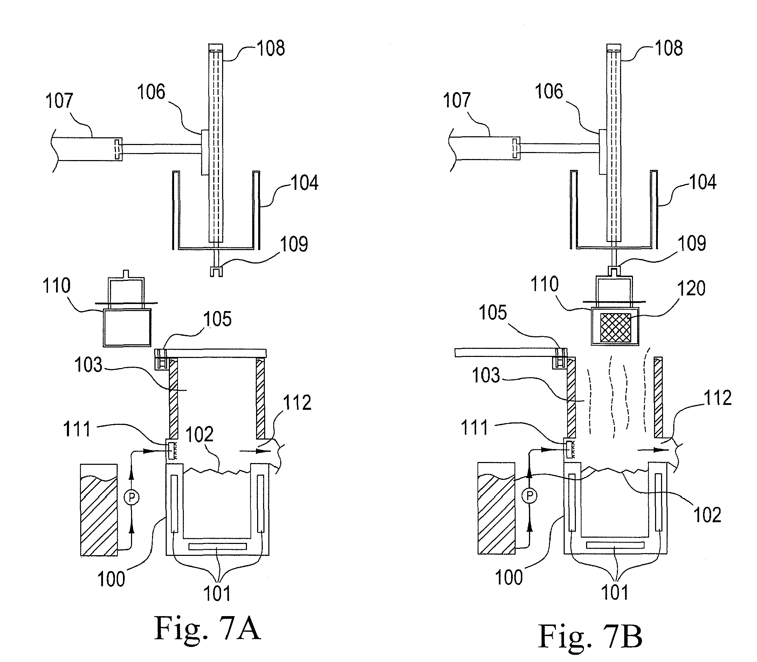

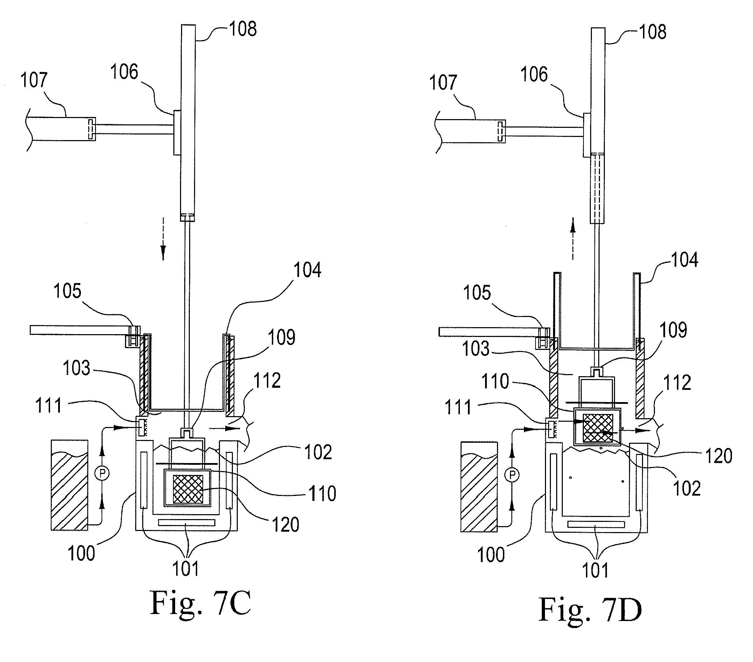

Referring to Fig .3, the exploded view shows the control of thermal cracking reaction system for said method and apparatus for thermal cracking organic macromolecule mixture to recycle differentiated substrates. With respect to the thermal cracking reaction system in the method for thermal cracking organic macromolecule mixture by using molten inorganic salts to separate substrates in mixed materials so as to achieve the object of differentiated recycle, the inventor had set up following novel rapid, safe and energy-saving thermal cracking methods:
(1) Set up a positive pressure oxygen-insulating system: Its object is to hinder the intrusion of air (oxygen), form a stable thermal cracking environment, and prevent organic materials from burning (for example, ignition and gas explosion). Great amount of gas will generate in the course of thermal cracking and hence produce a positive pressure. In the absence of thermal cracking (reactants entering/exiting reaction furnace), pressure will drop down, and at this time, the channels at front/rear ends of the reaction furnace can be closed to prevent the entrance of air, and introduce moisture to provide positive pressure system necessary for operation, thereby set up a real positive pressure operation environment.
(2) Introduce a moisture (little amount of water) steady pressure reaction system: In this system, water is heated to form steam and hence produce expansion pushing force such that organic gases within the reaction furnace can be pushed forcibly out of the reaction furnace. Where moisture is used to produce pushing force so that, when reactants are fed, an ascending gas flow can prevent air (oxygen) from being drawn in, and hence has oxygen-eliminating effect. Besides, moisture can be used to lower the temperature of reactant and molten salt so as to prevent molten salt from excess fierce reacting (large amount of heat released in case of excess high reaction temperature will lead operation risk), guarantee operation safety, and increase the stability of reaction; wherein, in addition to use spraying moisture, water droplets, and little amount of water, steam, inert gas or nitrogen gas can be used instead.
(3) Set up a gas automatic equilibrium system: It uses a gas automatic expansion device to stabilize the curved gas generation variation in the thermal cracking. When the amount of gas is large, there is sufficient space to store and retard the effect of pressure increase on operation safety. When the pressure is increased, said device will release automatically a space to maintain system operation pressure; while gas amount is decreased, the device will return automatically to the original state to achieve an equilibrium system pressure, thereby it can stabilize the reaction process. The upper limit of pressure is restricted using water sealing or oil sealing systems in a manner to reduce operation pressure. Its design principle comprises of equilibrating structural weight by using pulling force of a spring so as to increase its sensitivity (Fig. 4), or increasing the sensitivity of automatic expansion device by using weight equilibrium principle to raise operation reliability (Fig. 5).
(4) Set up a vertical feeding system: It takes advantage mainly of hot gas ascending principle to prevent heat convection such that, when reactants are fed from right above into reaction furnace, the hot gas ascending in the reaction furnace will not cause convection. Further, a lot of steam can be produced by introducing moisture to provide strong and powerful pushing force, which can push air that might be carried in during feeding of reactant out of reaction furnace, thereby the operation system can be safer, and no stack effect that may draw air from lower part will occur (Fig. 7B).
(5) Set up a vertical reaction stand and carbon membrane removing system: In the thermal cracking of organic macromolecule mixture, organic gases and carbon ash will be formed in accordance with composition and temperature. When there are a lot of carbon ashes, they tend to float and stack over the surface of molten salt. Under this circumstance, as the reactant is removed, there may exist carbon membrane which will affect the condition of next operation and must be removed simultaneously. A carbon membrane removing net is provided above the mobile reaction stand, which removes carbon membrane at the same time of removing reactant. Principally, mobile reaction stand must overcome the problem of reactant's specific gravity (density); when the specific gravity is lower, reactants tend to float over the surface of molten salt, and then the reaction performance will not be safe; while the specific gravity is higher, they tend to settle down to the bottom of molten salt. The reactant is better at a certain restrictive molten salt position and is ready to move out of molten salt. Therefore, the reactant is designed to be fixed in a mobile reaction stand such that the reactant can only react at a fixed position, and will not float or precipitate relative to the specific gravity; thereby the reactant is limited at a certain position so as to achieve a consistent reaction condition.
(6) Set up a reaction furnace open/close venting system: In the thermal cracking reaction, large quantity of gas will be produced. The gas has to be discharged out of reaction furnace as soon as possible. To prevent pressure from ascending, the venting channel must be opened. When the thermal cracking reaction completes, gas generation stops. At this time, in order to prevent gas in the rear section from returning back, the venting system must be closed. Water level ascending is used to form water seal, which can obtain readily a control effect.
(7) Set up an organic gas condensation/compression recycling system: After organic gas generated in the thermal cracking is compressed, a condensed oil-like organic material (large molecule) may form, while substances with high ignition points will combine with carbon ash to form tar (combustible oil). On the other hand, incondensable organic gas is a gas state combustible gas (small molecule) with low ignition point. Recycling these separately can increase recycling and reuse, enhance recycling efficiency, as well as achieve the effect of energy-saving and carbon-reducing. Other than converting oil and gas into fuel to reuse, they can be re-processed into industrial chemical. With respect to condensation/compression mode, in addition to direct water cooling or oil cooling, heat exchange method can be used also to cool indirectly and achieve the same object of condensation/compression.
(8) Set up a mobile sealing gate control system: In the moment of removing reactant, moving of reactant may cause gas to escape outwardly, and a safety risk may thus exist on the operator. Against this, a mobile sealing gate is used particularly, which takes advantage of water sealing or oil sealing principle, gives sealing effect even in the moment of removing reactants. Removing reactant after organic gases being discharged completely (through moisture introducing, organic gas can be discharged forcibly and the reactant can be cooled) is the only safe operation mode (Fig. 7D).
(9) Set up a reaction pressure monitoring system: Gas generation in the thermal cracking will raise pressure. As reaction completed, gas is reduced or terminated and the pressure drops down. The condition of the system in thermal cracking can be known obviously, whether thermal cracking ends or not, whether thermal cracking reaction is too vigorous or not, whether the amount is excessive or not, and hence reflects whether the system is safe or not. Setting up the monitoring system can guarantee an operation safety.

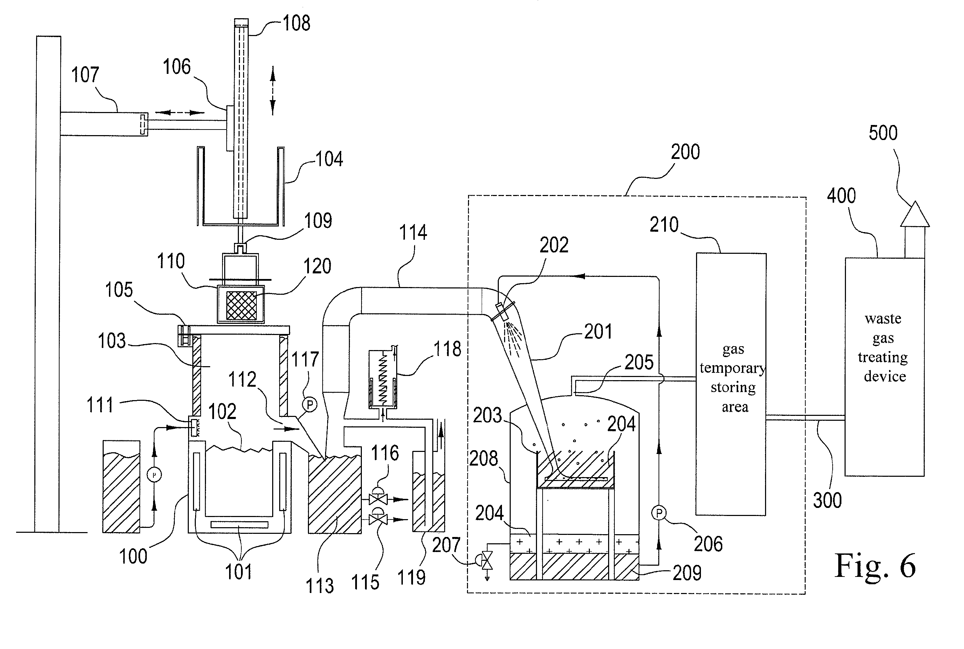

Referring to Fig. 6, a schematic view shows the whole framework of thermal cracking reaction apparatus for said method and apparatus for thermal cracking organic macromolecule mixture to recycle differentiated substrates, which uses molten inorganic salt to thermal crack organic macromolecule mixture so as to recover substrates in the mixture, and comprises:
a reaction furnace 100, provided with reaction furnace heaters 101 on its bottom and lower peripheral parts; with molten inorganic salt 102 which may be nitrate salt or nitrite salt contained in the lower part of said reaction furnace 100; through said reaction furnace heater 101, molten inorganic salt 102 being present as molten state; a reaction furnace gas buffering area 103 being provided in the middle part of said reaction furnace 100; and a mobile sealing gate 104 and upper lid 105 being provided right above said reaction furnace 100; wherein said reaction furnace heater 101 may be heated electrically or using fuel;
a fixing stand for reactant delivery 106, provided in the upper part outside of the reaction furnace 100, and being responsible for providing delivery and motion of reactant 120; said fixing stand for reactant delivery 106 being provided above it with a drive for reaction stand delivery 107 and a drive for reaction stand entering 108, wherein said drive for reaction stand delivery 107 provides left and right displacement, while said drive for reaction stand entering 108 provides up and down displacement; said drive for reaction stand entering 108 being provided thereon with a set of reaction stand connector 109 which can connect or separate with a mobile reaction stand 110; wherein a reactant 120 can be accommodated within said mobile reaction stand 110; and said reactant 120 may be an organic macromolecule mixture; wherein said reaction stand connector 109 can function through mechanical jointing or electromagnet attraction; said drive for reaction stand delivery 107 can be driven through oil pressure or gas pressure, and can be driven also by using electrical screw; and said drive for reaction stand entering 108 can be driven through oil pressure or gas pressure, and can be driven also by using electrical screw;
a moisture introducing device 111, provided at a upper side position of a reaction furnace oxygen buffering area 103 of said reaction furnace 100, and providing mainly a nozzle for spraying moisture onto the surface of molten inorganic salt 102, which in the moment of reactant 120 entering/exiting said reaction furnace 100, the sprayed moisture can be heated directly and expands to produce ascending pushing force, thereby, in combination with a mobile sealing gate 104, outside air can be prevented from entering said reaction furnace100, and hence achieve oxygen-insulating effect; and besides, provides at any time a cooling effect over the surface of said molten inorganic salt 102, and hence prevents risk of excess high temperature;
a reaction furnace waste gas exit 112, provided at another side of said reaction furnace gas buffering area 103 and connected with a reaction furnace mobile water seal valve 113, and providing mainly a exiting direction of waste gas generated in the thermal cracking of the reactant 120, which flows through said reaction furnace mobile water seal valve 113 and enters into a waste gas buffering area 114; wherein said reaction furnace mobile water seal valve 113 provides mainly automatic water level lowering in the course of thermal cracking reaction, which is executed by a control valve for water discharging 116 through water-controlled open function, and as reaction stopped, water is supplied to form water sealing effect for preventing gas in the rear section from returning into said reaction furnace 100 and thus achieve a close effect, which is executed by a control valve for water feeding 115; wherein said waste gas may be nitrogen oxide gas; and said waste gas may be an organic gas;
a reaction furnace pressure control meter 117, provided above said reaction furnace waste gas exit 112 and used to detect the pressure within said reaction furnace 100; pressure raising indicating the starting of thermal cracking, and pressure dropping meaning the end of thermal cracking reaction, thereby knowing clearly whether reaction ends or not, and whether the reactant 120 can be removed safely or not; and further, in combination with time confirmation and temperature change, judging actually whether the thermal cracking is complete;
a mobile reaction stand 110, being connected at the front end of said drive for reaction stand entering 108 or detached from its reaction stand, providing space for the reaction of reactant 120 in thermal cracking, and eliminating the specific gravity problem of reactant 120, such that said reactant 120 can stay in the molten inorganic salt 102 and undergo thermal cracking, as well as can maintain a gas discharging channel; wherein a carbon slag floating net is provided above said mobile reaction stand 110, which can remove carbon slag on the surface of molten inorganic salt 102 at the same moment of removing reactant;
a gas automatic expansion device 118, provided on a side of waste gas buffering area 114, which in case of large volume of gas, adjusts and moves automatically to provide a space for storing gas, and when gas volume is reduced, it presses automatically the gas in the space and closes its structure; wherein, it uses water seal or oil seal and spring device to enhance sensitivity, or uses water seal and weight balancing wheel to control sensitivity based on weight difference (Fig. 4 and 5), such that in case of high pressure, it can open automatically, and when pressure is low, it can close automatically, thereby gives a complementary effect;
a safe discharging device 119, provided on one side of said waste gas buffering area 114, and based on the principle that gas will rush out and discharge when gas pressure is higher than water seal pressure, thereby achieves the object of structural safety, to guarantee effectively the safety of reaction furnace 100 and operators, as well as can prevent external gas from penetrating into the reaction furnace 100;
a waste gas condensation/recycling device 200, provided on the rear side of said waste gas buffering area 114, and connected on its rear side to a waste gas treating device 400 such that safe discharging can be carried out thereafter to achieve the requirement of environmental protection disposal;
a condensation/compression pipe 201, connected with waste gas buffering area 114 of said reaction furnace, and provided with a condensation/spraying device 202 in the jointing part, such that it can take advantage directly the mixing of moisture and waste gas to pass said condensation/compression pipe 201, where they condense into a liquid state tar (mixture of oil and carbon ash) which is guided into condensation water sealing tank 203 at the rear section and then into a gas/liquid separation tank 208, where tar 204 is separated from the gasified substances, thereby achieve readily the object of recycling tar 204; while gases in the gasified substances is discharged thereafter through gas exit 205 into a gas temporary storing area 210; said gas temporary storing area 210 is connected at its rear section with a pipe 300, and connected with a waste gas treating device 400 at rear section; said waste gas treating device 400 is provided at its upper part with a waste gas safe discharging port 500 to discharge the thus-treated waste gas to the external part;
a condensation/spraying device 202, provided in the front end of said condensation/compression pipe 201; wherein the condensation in said condensation/spraying device 202 may be direct condensation, or indirect condensation to perform said condensation device; further, at its frond end, a pressure pump 206 is provided to connect with the lower water part of said gas/liquid separation tank 208, thereby complete a whole integral system; and wherein raising of water temperature can be compensated by using force blow cooling or liquid cooling;
a tar exit 207, provided in the upper side of a water layer 209, and being able only to discharge oil while leave water in said gas/liquid separation tank 208; and wherein the above-described condensation water and water sealing part can be replaced also with oil sealing; and
a waste gas treating device 400, provided at the gas exit 300 of said gas temporary storing area 210; wherein waste gas can be treated by using commercial organic gas and nitrogen oxide gas treating device, or can be burned directly to recycle heat energy of the waste gas, or reused through electric transformation, and then discharged safely.

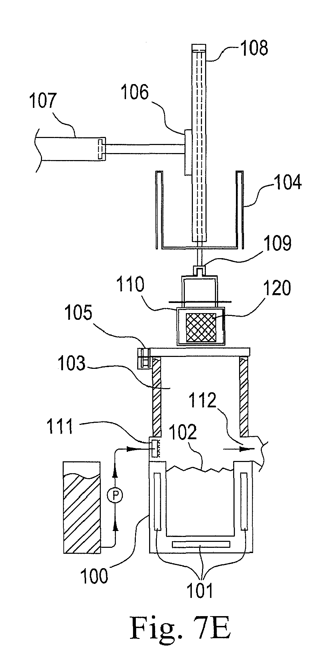

Further, referring to Fig. 7A to 7E, schematic views shows the carrying out of a thermal cracking reaction for said method and apparatus for thermal cracking organic macromolecule mixture to recycle differentiated substrates. It comprises of feeding vertically reactant 120 into a mobile reaction stand 110, driving a drive for reaction stand delivery 107 to connect a reaction stand connector 109 thereon with a mobile reaction stand 110, and open the upper lid 105 right above the reaction furnace (Fig . 7A and B) to let mobile reaction stand 110 move downwardly into the reaction furnace 100; then, water is introduced and heated to generate steam which expands to push oxygen carried in by the mobile reaction stand 110 out of the reaction furnace 100, such that the reaction furnace 100 has a positive pressure effect; mobile sealing gate 104 positioned at a suitable place on the mobile reaction stand 109 will close temporarily the upper end of the reaction furnace 100 to set up a oxygen barrier effect that avoids the external air from entering the reaction furnace 100; when reactant 120 in the mobile reaction stand 110 is soaked completely in molten inorganic salt 102, thermal cracking reaction process can be carried out (Fig. 7C), and the reaction time of thermal cracking is about 1 to 5 minutes; wherein in the course of thermal cracking reaction, waste gas generated is discharged forcibly through the reaction furnace waste gas exit 112 into the reaction furnace mobile water seal valve 113, and after the thermal cracking reaction ends completely, the mobile reaction stand 110 moves upwardly, and at the same time, steam generated from moisture is used to remove waste gas produced after reaction out of reaction furnace 100 and to cool reactant 120 (Fig. 7D); thereafter, the upper lid 105 is closed again to cover the port right above the reaction furnace 100 (Fig. 7E), thereby complete the process of thermal cracking reaction.

In which, the reaction time for the thermal cracking of said reactant 120 in the molten inorganic salt 102 is most preferably 3 minutes.

In which, in the method for thermal cracking organic macromolecule mixture using molten inorganic salt to separate and recycle substrate in the mixed material, said molten inorganic salt may be at least one selected from the group consisting of highly active nitrate salt or nitrite salt containing lithium, sodium, potassium, rubidium, cesium, and francium, or it may be single or mixed molten salts to form a liquid thermal cracking reaction furnace with its fusing temperature in the range of 180°C∼580°C, and carry out thermal cracking at different temperature according to different organic macromolecular material, wherein the reactant is embedded and heated directly such that its temperature is homogeneous and rapid, and hence molten salt can provide safe and steady thermal cracking environment.

In which, by using a condensation/compression system, organic gas is separated into a condensable fuel (large molecule) with high ignition point, which can combined with the escaped carbon ash to form tar, and can be used as fuel or re-processed into industrial raw materials. On the other hand, incondensable gas is fuel gas (small molecule) with low ignition point, and can be guided into a burning device to recycle heat energy, or can be converted into electrical energy, or by using a commercial VOCs waste gas treating device, the organic gas and nitrogen oxide obtained after reaction can be treated and then discharged safely and harmlessly; in case of large amount, the fuel gas can be compressed under high pressure into purified fuel gas to be used later.

In which, in the method for thermal cracking organic macromolecule using molten inorganic salt to separate and recycle substrates in a mixed material, differentiation of reactants after reaction can be done through water washing based on the fact that molten inorganic salts and halide salts can be dissolved in water readily, while carbon slag and substrates is insoluble in water, such that the carbon slag and substrates can be separated off easily, and besides, they can be separated readily with each other also due to the difference of specific gravity. When the carbides on the surface of substrates need to be removed, they can be heated in an oxygen-containing environment at a temperature higher than 400°C, and then, carbon will decompose and leave the surface of substrates, thereby substrates with high purity can be obtained. The recycled carbon slag can be used as fuel, or can be reprocessed into usable industrial raw materials, such as carbon black, active carbon and the like. There is great difference in melting point and specific gravity between inorganic salt and halide salt, this leads to easy separation and can be converted into chemical industrial raw materials to be reused.

The method and apparatus for thermal cracking organic macromolecule mixture to recycle differentiated substrates provided by the invention has following advantages compared with other conventional techniques:
1. The invention provides a safety to guarantee effectively the thermal cracking process. Using the inventive apparatus, burning phenomenon can be avoided to achieve the operation safety of operators, and hence avoided the occurrence of dangerous factors.
2. With respect to the aspect of organic gas, the invention provides a method to compress and purify them into usable fuel or chemical raw materials, thereby in addition to lower greatly the treating cost, it can increase effectively the recycling value, and multiple benefits such as creating safe treating apparatus and the like. Therefore, it has extremely high industrial utilization value.

The above detailed description is merely a concrete description for a feasible embodiment according to the invention, and not intend to limit the patent scope of the invention; those equivalent examples or variation not departing from the art and spirit of the invention are intended to be fallen within the patent scope of the invention.

In summary, the invention is innovative in technical thought, and can increase the above-described effects over conventional art; these make it meeting sufficiently the requirements of novelty and inventiveness stipulated by the patent elements. Accordingly, a patent right application is filed and is expected to get the deserved patent right as soon as possible.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A method for thermal cracking organic macromolecule mixture to recycle differentiated substrates, comprising following steps:
step 1: feeding reactant in a mobile reaction stand, driving a drive for reaction stand delivery to connect a reaction stand connector thereon with said mobile reaction stand, opening an upper lid right above said reaction furnace to allow said mobile reaction stand moving down into the reaction furnace;
step 2: introducing water, heating and expanding to produce steam that pushes oxygen gas carried in by the mobile reaction stand out of the reaction furnace, and leaves the reaction furnace a positive pressure effect; at this moment, mobile sealing gate positioned at a suitable place on said mobile reaction stand closing temporarily the upper end of said reaction furnace to set up oxygen barrier effect and prevent external air from entering said reaction furnace; wherein, when reactants in the mobile reaction stand are soaked completely in said molten inorganic salt, thermal cracking reaction process is started to carry out, where said thermal cracking reaction is carried out in a time period of about 1 to 5 minutes;
step 3: in the course of thermal cracking reaction, discharging forcibly waste gas generated through reaction furnace waste gas exit into a reaction furnace mobile water seal valve, and after thermal cracking reaction being ended completely, moving the mobile reaction stand upwardly such that steam generated from moisture is used to remove waste gas out of the reaction furnace and can be used to cool reactant;
step 4: finally, closing again the upper lid on the port right above the reaction furnace to complete the thermal cracking reaction process.

2. A method for thermal cracking organic macromolecule mixture to recycle differentiated substrates as recited in claim 1, **characterized in that** said method is applied alone for the recycling carbon of organic macromolecule and for the thermal cracking of relative organic materials and simultaneous treatment of halogens.

3. An apparatus for thermal cracking organic macromolecule mixture to recycle differentiated substrates, comprising:
a reaction furnace, provided with reaction furnace heaters at its suitable lower parts, and containing molten inorganic salt in the lower half part of said reaction furnace, wherein through said reaction furnace heaters, said molten inorganic salt becomes molten state; and wherein a reaction furnace gas buffering area is provided at the middle part of said reaction furnace, and a mobile sealing gate and a upper lid are provided right above said reaction furnace;
a fixing stand for reactant delivery, provided in the upper outside part of said reaction furnace, responsible for the delivery of reactant; wherein a drive for reaction stand delivery and a drive for reaction stand entering are provided right above said fixing stand for reactant delivery, and said drive for reaction stand delivery provides left and right displacement, while said drive for reaction stand entering provides up and down displacement;
a moisture introducing device, provided at the upper side of the reaction furnace gas buffering area of said reaction furnace, providing nozzles for spraying moisture toward the surface of the molten inorganic salt such that, when the reactant enters/exits the reaction furnace, the sprayed moisture is heated directly and expands to produce an ascending pushing force, which, by combining with the mobile sealing gate, prevent external air from entering the reaction furnace to achieve oxygen barrier effect, and at the same time, provides at any time cooling effect on the surface of the molten inorganic salt to prevent the risk of excess high reaction temperature;
a reaction furnace waste gas exit, provided at another side of the reaction furnace gas buffering area and connected with the reaction furnace mobile water seal valve, providing mainly the guiding of the reactant thermal cracking waste gas flow exit, through the reaction furnace mobile water seal valve and into the waste gas buffering area; wherein said reaction furnace mobile water seal valve provides mainly the automatic water level lowering during thermal cracking reaction, which is executed by control valve for water discharging using water control open function, and when reaction stops, supplies water to form water sealing which prevents gas in the rear section from returning into the reaction furnace, thereby achieve the closing action which is executed using a control valve for water feeding;
a reaction furnace pressure control meter, provided above the reaction furnace waste gas exit for detecting the pressure in the reaction furnace; wherein, when the pressure ascends, thermal cracking starts, and when the pressure drops down, the thermal cracking reaction ends, thereby it can be known clearly whether the reaction ends or not, and whether it is safe to remove reactant; which, in combination with time confirmation and temperature change, can judge more accurately whether the thermal cracking is complete or not;
a mobile reaction stand, connected to the front end of the drive for reaction stand entering or detaching from its reaction stand, providing space for reactant in the thermal cracking reaction, and eliminating specific gravity problem of reactant, allowing reactant staying in the molten inorganic salt to undergo thermal cracking, and maintaining a gas discharging channel; wherein a carbon slag floating net is provided in the upper part of the mobile reaction stand, which can remove carbon slag on the surface of the molten inorganic salt at the same time of removing reactant ;
a gas automatic expansion device, provided at the side of the waste gas buffering area; when gas amount is large, said device adjusts and moves automatically to give a space for storing gas, while gas amount is small, it presses automatically the gas out of the space and closes its structure;
a safe discharging device, provided at the side of waste gas buffering area, achieving the object of structural safety based on the principle that gas will escape and discharge when gas pressure is higher than water sealing pressure, guaranteeing effectively safety of the reaction furnace and operators, and preventing external gas from penetrating into the reaction furnace;
a waste gas condensation/recycling device, provided at the rear end of the waste gas buffering area, and connected to the rear waste gas treating device, where can discharge safely to achieve the requirement of environmental protection;
a condensation/compression pipe, connected to the waste gas buffering area of the reaction furnace, and provided with a condensation/spraying device within its jointing end, such that it can take advantage directly the mixing of moisture and waste gas to pass said condensation/compression pipe, where they condense into a liquid state tar which is guided into condensation water sealing tank at the rear section and then into a gas/liquid separation tank, where tar is separated from the gasified substances, thereby achieve readily the object of recycling tar; while gases in the gasified substances is discharged thereafter through gas exit into a gas temporary storing area; said gas temporary storing area is connected at its rear section with a pipe, and connected with a waste gas treating device at rear section; wherein said waste gas treating device is provided at its upper part with a waste gas safe discharging port to discharge the thus-treated waste gas to the external part, or compressing directly the gas in the gas temporary storing area into liquefied fuel gas;
a condensation/spraying device , provided in the front end of said condensation/compression pipe; wherein the condensation is direct condensation, or indirect condensation to perform said condensation device; further, at its frond end, a pressure pump is provided to connect with the lower water part of said gas/liquid separation tank, thereby complete a whole integral system;
a tar exit, provided in the upper side of water layer of a gas/liquid separation device, and being able only to discharge oil while leave water in said gas/liquid separation tank; and wherein the above-described condensation water and water sealing part can be replaced also with oil sealing;
a waste gas treating device, provided at the gas exit of said gas temporary storing area;
wherein waste gas can be treated by using commercial organic gas and nitrogen oxide gas treating device, or can be burned directly to recycle heat energy of the waste gas, or reused through electric transformation, and then discharged safely.

4. An apparatus for thermal cracking organic macromolecule mixture to recycle differentiated substrates as recited in claim 3, wherein said molten inorganic salt is one selected from the group consisting of highly active nitrate or nitrite of lithium, sodium, potassium, rubidium, cesium and francium; and wherein said molten salt is used as single salt or mixed salts, and the temperature in the molten salt is in the range of 180°C∼580°C, that can be used in the condition of the thermal cracking of organic macromolecular materials.

5. An apparatus for thermal cracking organic macromolecule mixture to recycle differentiated substrates as recited in claim 3, wherein said macromolecular material in said organic macromolecular mixture is one selected from the group consisting of plastics, rubber, fiber, adhesives, and paints.

6. An apparatus for thermal cracking organic macromolecule mixture to recycle differentiated substrates as recited in claim 3, wherein said substrate is one selected from the group consisting of glass fiber, metal fiber, carbon fiber, metal, glass, and ceramic.

7. An apparatus for thermal cracking organic macromolecule mixture to recycle differentiated substrates as recited in claim 3, wherein said reaction furnace heater is heated using electrical energy or fuel.

8. An apparatus for thermal cracking organic macromolecule mixture to recycle differentiated substrates as recited in claim 3, wherein a set of reaction stand connector is provided on said drive for reaction stand entering, which is connected or separated with a mobile reaction stand by means of mechanical jointing or electromagnet attraction force, and wherein a part within said mobile reaction stand is used to accommodate reactant.

9. An apparatus for thermal cracking organic macromolecule mixture to recycle differentiated substrates as recited in claim 1 or 3, wherein said reactant is organic macromolecule mixture or other macromolecular material.

10. An apparatus for thermal cracking organic macromolecule mixture to recycle differentiated substrates as recited in claim 3, wherein said gas automatic expansion device uses weight difference balancing method and spring attraction force device to enhance and control its sensitivity, such that it can give flexibly sufficient space to allow a consistent operation pressure according to the size of gas amount, unify operation condition to achieve equilibrium effect, and allow batchwise reaction having homogeneous effect.

11. An apparatus for thermal cracking organic macromolecule mixture to recycle differentiated substrates as recited in claim 3, wherein said water sealing/water cooling is replaced with oil sealing/oil cooling.

12. An apparatus for thermal cracking organic macromolecule mixture to recycle differentiated substrates as recited in claim 3, wherein sprayed mist in said condensation/spraying device is condensed and compressed directly, or is condensed indirectly, and captures directly carbon ash and large molecular oils through liquid water (oil) and stores them in a gas/liquid separation tank; wherein the part that can not be liquefied is discharged to be treated; wherein said two-part treating manner can set up a closed water sealing system, has air barrier effect to enhance safety and reduce energy waste, increase recycle/reuse efficiency, and achieve the object of energy-saving and carbon-reducing; and wherein the condensation manner thereof comprises of indirect heat exchange to capture and condense organic gas into oil, or allow oil/gas separation to recycle in different part.

13. An apparatus for thermal cracking organic macromolecule mixture to recycle differentiated substrates as recited in claim 3, wherein said gas automatic expansion device uses water sealing and weight balancing wheel to adjust and move automatically to give a space for storing gas based on weight difference.

14. An apparatus for thermal cracking organic macromolecule mixture to recycle differentiated substrates as recited in claim 3, wherein raising of water temperature in said condensation/spraying device is compensated by using force blow cooling or liquid cooling.
